# EUROPÄISCHE PATENTSCHRIFT

(11) **EP 2 895 779 B1**
(45) Veröffentlichungstag und Bekanntmachung des Hinweises auf die Patenterteilung: **13.01.2021**
(21) Anmeldenummer: 13766485.0
(22) Anmeldetag: 12.09.2013
(51) Int. Cl.: F16L 13/02, F16L 13/10, F16L 13/14, F16L 53/00

(54) **VORRICHTUNG ZUM VERBINDEN VON ZWEI FLUID FÜHRENDEN LEITUNGEN**
DEVICE FOR CONNECTING TWO FLUID CHANNELLING LINES
DISPOSITIF POUR RELIER DEUX CONDUITES TRANSPORTANT DU FLUIDE

(30) Priorität: 13.09.2012 DE 102012018069
(43) Veröffentlichungstag der Anmeldung: 22.07.2015
(73) Patentinhaber: Eugen Forschner GmbH, 784549 Spaichingen (DE)
(72) Erfinder: PUSKAS, Ludwig, 78549 Spaichingen (DE); CHALOUPKA, Thomas, 78549 Spaichingen (DE)
(74) Vertreter: K&P Patentanwaltsgesellschaft mbH
(86) Internationale Anmeldenummer: PCT/EP2013/068959
(87) Internationale Veröffentlichungsnummer: WO 2014/041100

(56) Entgegenhaltungen:
- EP-A1- 0 312 758
- EP-A1- 0 379 635
- WO-A1-2009/080501
- DE-A1- 19 741 641
- DE-A1-102010 010 765
- DE-U1- 9 107 713
- DE-U1-202009 003 807
- US-A1- 2002 058 436
- US-A1- 2009 021 002

## Beschreibung

Die Erfindung betrifft eine Vorrichtung zum Verbinden von zwei Fluid führenden Leitungen miteinander gemäß dem Oberbegriff des Anspruchs 1.

Aus der US 2009/021002 A1 ist eine Vorrichtung zum Verbinden zweier Schlauchenden bekannt, die zum Einführen in einen Ringraum einer Schlauchkupplung aufweitbar sind. Die im medizinischen Bereich eingesetzten Schläuche bestehen aus PVC oder Polyurethan und sind daher leicht aufweitbar. Zur zusätzlichen Abdichtung kann im Ringraum ein Klebstoff vorgesehen sein.

Aus dem deutschen Gebrauchsmuster DE 1 732 279 U1 ist eine Verbindung zwischen zwei Fluid führenden Leitungen bekannt, genauer ein Verbindungselement zum Verbinden von zwei Gartenschläuchen. Das Verbindungselement ist als einstückiges Bauteil ausgebildet, durch das eine durchgängige Bohrung führt und das an seiner Außenseite mit einem gegenläufig ausgebildeten Gewinde versehen ist, so dass zwei Gartenschläuche durch Aufschrauben auf das Gewinde einfach miteinander verbunden und wieder voneinander getrennt werden können.

Ferner ist aus dem Europäischen Patent EP 2 035 737 B1 eine Manschette zum Verbinden von zwei jeweils mit einem Anschlusskragen ausgebildeten Rohren bekannt. Die Manschette ist dabei über die Anschlusskragen der zu verbindenden Rohre aufschiebbar und durch eine Verriegelungsvorrichtung gegen unbeabsichtigtes Entfernen gesichert, kann jedoch relativ einfach wieder entfernt werden.

In der Nutzfahrzeug- und Automobilindustrie werden Fluid führende Leitungen verwendet, um beispielsweise Harnstoff-Wasser-Gemische zur umweltschonenden Abgasreinigung zu transportieren. Da die Leitungen, die diese Harnstoff- Wasser-Gemische führen, beheizbar sein müssen, wird die elektrische Kontaktierung typischerweise im Bereich einer Schlauchkupplung (Konnektor) angeordnet. Außerdem muss in der Nutzfahrzeug- und Automobilindustrie möglichst mit kompakter Bauweise kostengünstig gearbeitet werden, so dass Leitungen für Harnstoff- Wasser-Gemische möglichst günstig herstellbar sein sollten. Diese Leitungen müssen alle geltenden Vorschriften bezüglich der Medienbeständigkeit, der Dichtigkeit oder der Temperaturbeständigkeit erfüllen.

Aufgabe der Erfindung ist die Bereitstellung einer verbesserten Vorrichtung zum Verbinden von zwei Fluid führenden Leitungen, speziell für die Anwendung im Bereich der Nutzfahrzeug- und Automobilindustrie, und besonders bevorzugt für Leitungen, die Harnstoff-Wasser-Gemische führen.

Diese Aufgabe wird durch die Merkmale des Anspruchs 1 gelöst. Vorteilhafte Ausgestaltungen der Erfindung sind in den Unteransprüchen angegeben.

Die erfinderische Lösung sieht vor, dass eine Vorrichtung zum Verbinden von zwei Fluid führenden Leitungen eine durchgängige Bohrung zur Weiterleitung des Fluids aufweist, wobei die Vorrichtung zwei sich gegenüberliegende Leitungsaufnahmen aufweist, die in einem vorbestimmten Abstand voneinander innerhalb der Vorrichtung enden. Jede der sich gegenüberliegenden Leitungsaufnahmen ist derart ausgebildet ist, dass sie mit einem ersten Teil, durch den die durchgängige Bohrung führt, und einem das erste Teil umgebenden zweiten Teil versehen ist, so dass zwischen dem ersten Teil und dem zweiten Teil ein Ringraum gebildet ist, dessen Boden das Ende der jeweiligen Leitungsaufnahme definiert. Die erste der Fluid führenden Leitungen ist derart in einer der Leitungsaufnahmen angeordnet dass sie mit einem inneren Querschnitt dichtend an dem ersten Teil der Vorrichtung und mit einem äußeren Querschnitt in dem Ringraum angeordnet und dort fixiert ist. Die zweite der Fluid führenden Leitungen ist derart in der anderen der Leitungsaufnahmen angeordnet, dass sie mit einem inneren Querschnitt dichtend an dem ersten Teil der Vorrichtung und mit einem äußeren Querschnitt in dem Ringraum angeordnet und dort fixiert ist. Dabei ist die erste der Fluid führenden Leitungen für einen Einsatz in einem höheren Temperaturbereich und die zweite der Fluid führenden Leitungen für einen Einsatz in einem niedrigeren Temperaturbereich ausgebildet und jede der Fluid führenden Leitungen ist aus einem unterschiedlichen Material hergestellt. Jede der Fluid führenden Leitungen ist aus einem unterschiedlichen Material hergestellt, um den Temperaturbedingungen zu entsprechen und eine kostengünstigere Herstellung zu ermöglichen. Die Vorrichtung ist derart ausgebildet, dass die Leitung von einem Schlauch gebildet wird. Ein Schlauch hat gegenüber einer Leitung den Vorteil, dass er eine gewisse Biegsamkeit aufweist und somit eine einfachere und flexiblere Verlegung möglich ist.

Erfindungsgemäß ist dazu die erste der Fluid führenden Leitungen für einen Einsatz in einem höheren Temperaturbereich T1 von -40°C < T1 ≤ 200°C und die zweite der Fluid führenden Leitungen für einen Einsatz in einem niedrigeren Temperaturbereich T2 von -40°C < T2 ≤ 120°C ausgelegt. Diese Temperaturbereiche sind für die Anwendung in einem Automobil oder Nutzfahrzeug geeignet, wenn eine Leitung in einem motornahen Bereich und die andere Leitung in einem nicht motornahen Bereich eingesetzt wird.

Durch diese Vorrichtung ist eine kompakte, sichere und Kostengünstige Verbindung von zwei Fluid führenden, vorzugsweise ein Harnstoff- Wasser-Gemisch führenden Leitungen gewährleistet. Außerdem wird keine zusätzliche lösbare Zwischenverbindung wie z.B. eine Manschette benötigt, durch die eine gewisse Unsicherheit in der Dichtigkeit entsteht.

Vorzugsweise ist die Vorrichtung derart ausgebildet, dass jede der Fluid führenden Leitungen mittels eines den Ringraum wenigstens zum Teil ausfüllenden Klebstoffs fixiert ist. Bevorzugt ist dabei an dem Boden jedes der Ringräume wenigstens ein Abstandshalter ausgebildet, der einen vom Boden beabstandeten Anschlag für das Ende jeder der Leitungen bildet. Durch diese Anordnung wird ein dichtes Umschließen und damit aufgrund der großen stirnseitig und mantelseitig bereitgestellten Klebeflächen ein besonders sicheres Fixeren der Leitungen bezüglich der durchgehenden Bohrung gewährleistet und auch eine kompakte Bauweise ermöglicht.

Alternativ zu einer Verbindung durch Kleben ist die Vorrichtung vorzugsweise derart ausgebildet, dass jede der Fluid führenden Leitungen mittels Reibschweißen, Ultraschallschweißen oder Laserschweißen in dem Ringraum fixiert ist. Der Vorteil eines Schweiß-Verfahrens zum Fixieren der Leitungen ist, dass ein solches Verfahren ein schnelles und kostengünstiges Herstellen der Vorrichtung erlaubt. Die einwandfreie Positionierung der Leitungsenden vor dem Schweißen wird durch deren Anordnung in den Ringräumen gewährleistet.

Gemäß einer weiteren Alternative ist die Vorrichtung vorzugsweise derart ausgebildet, dass jede der Fluid führenden Leitungen mittels einer Crimpverbindung an den zweiten Teil verbunden ist. Der Vorteil des Crimpverfahrens ist, dass relativ schnell eine kostengünstige mechanische Verbindung zwischen den Leitungen und der Vorrichtung geschaffen werden kann. Für die Anbringung einer Crimpverbindung ist die Länge des äußeren zweiten Teils der Leitungsaufnahmen bezogen auf deren inneren ersten Teil entsprechend reduziert.

Das Fluid in jeder der Leitungen wird vorzugsweise von einem Harnstoff-Wasser-Gemisch gebildet, wodurch ein Einsatz der Vorrichtung in der Nutzfahrzeug- und Automobilindustrie möglich ist.

Die Vorrichtung ist derart ausgebildet, dass die Fluid führenden Leitungen beheizbar sind. Dies hat den Vorteil, dass die Leitungen für Fluide eingesetzt werden können, bei denen das Unterschreiten einer vorbestimmten Temperatur nicht erwünscht ist und deshalb ein Heizen der Leitungen erforderlich ist.

Die Vorrichtung ist vorzugsweise derart ausgebildet, dass wenigstens zwei Heizkreise bereitgestellt sind. Bevorzugt erfolgt die Ansteuerung oder die Leistungsteuerung jedes der Heizkreise über wenigstens einen Temperatursensor. In einer vorteilhaften Ausführungsform sind die Heizkreise, beispielsweise in Form von Heizdrähten, Heizfolien oder Heizmatten an oder in jeder Fluid führenden Leitungen angeordnet, dort fixiert und außerhalb der Vorrichtung elektrisch kontaktiert oder miteinander verbunden. Ferner ist eine Ummantelung um die Kontakte oder die Verbindungsstellen der Heizkreise bereitgestellt. Der Vorteil des Bereitstellens wenigstens zweier Heizkreise ist, dass durch eine getrennte und/oder unterschiedliche Beaufschlagung dieser Heizkreise eine getrennte Leistungssteuerung und damit eine individuelle Heiztemperatur in den einzelnen Leitungen bzw. Leitungsabschnitten bereitgestellt werden kann, so dass die Vorrichtung in unterschiedlichen Einsatzbereichen verwendet werden kann.

Die erfindungsgemäße Vorrichtung ist besonders bevorzugt in einem Gehäuse platziert, das aus einem Grundkörper und einem daran ausgebildeten oder angeordneten verschließbaren Deckel gebildet ist und in seiner Längsrichtung zwei sich gegenüberliegende Öffnungen aufweist, durch die jeweils eine der Fluid führenden Leitungen geführt ist. Ferner ist bevorzugt an den Öffnungen des Gehäuses ein Verbindungselement bereitgestellt, das dazu eingerichtet ist, eine Führungseinrichtung für jede der ein Fluid führenden Leitungen mit dem Gehäuse zu verbinden. Durch dieses Gehäuse wird ein dichtes Abschließen der Vorrichtung gegen Umwelteinflüsse gewährleistet, was vor allem in der Nutzfahrzeug- und Automobilindustrie wichtig ist, da hier hohe Anforderungen an die einzelnen Komponenten herrschen (Lastenhefte, Normen etc.).

In einer bevorzugten Ausführungsform weist das Gehäuse eine Aussparung für die Aufnahme einer Steuerplatine auf. Durch die Integration einer Steuerplatine wird eine noch kompaktere Bauform für eine individuelle Heizleistungssteuerung der verbundene Leitungen bzw. Leitungsabschnitte ermöglicht. Es werden weniger Einzelelemente für die Herstellung benötigt, was zu einer weiteren Kostenersparnis führt.

Nachfolgend wird ein Ausführungsbeispiel einer erfindungsgemäßen Vorrichtung zum Verbinden von zwei Fluid führenden Leitungen unter Bezugnahme auf die Zeichnungen näher erläutert. Dabei bezeichnen gleiche Bezugszeichen in den verschiedenen Figuren die gleichen Elemente. Es zeigt:
- Fig. 1: eine schematische Ansicht einer Ausführungsform der erfindungsgemäßen Vorrichtung;
- Fig. 2: eine schematische Ansicht einer weiteren Ausführungsform der erfindungsgemäßen Vorrichtung,
- Fig. 3: eine schematische Ansicht eines erfindungsgemäßen Gehäuses mit der darin angeordneten erfindungsgemäßen Vorrichtung und
- Fig. 4: eine schematische Ansicht eines erfindungsgemäßen Gehäuses mit einer Aussparung für eine Steuerplatine.

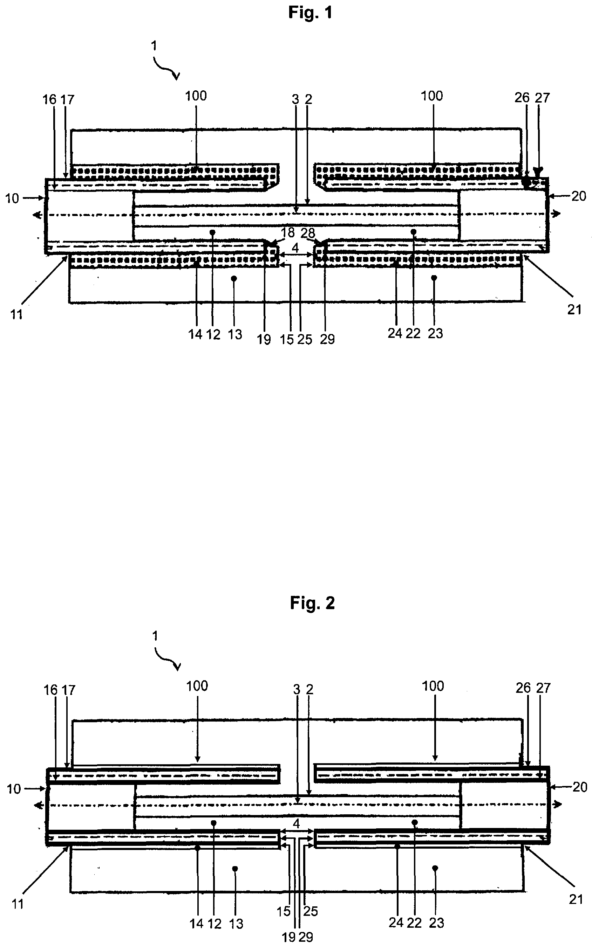

Figur 1 stellt schematisch ein erstes Ausführungsbeispiel einer erfindungsgemäßen Vorrichtung 1 dar. Die Vorrichtung 1 wird in Richtung ihrer Längsachse 3 von einer durchgehenden Bohrung 2 durchsetzt, so dass die Vorrichtung 1 an ihren jeweiligen Enden in Richtung der Längsachse 3 eine Öffnung aufweist. Es ist abweichend von der Darstellung in den Figuren jedoch auch eine abgewinkelte Vorrichtung möglich, bei der die Längsachse innerhalb der Vorrichtung abknickt oder abgebogen ist und dadurch eine Winkeländerung von beispielsweise 90° erfährt.

An den Enden der Vorrichtung ist jeweils eine Leitungsaufnahme 11, 21 vorgesehen, von denen jede eine Fluid führende Leitung 10, 20 aufnehmen kann. Die eine Leitungsaufnahme 11 endet innerhalb der Vorrichtung 1 in einem vorbestimmten Abstand 4 von der anderen Leitungsaufnahme 21 entfernt, so dass abgesehen von der durchgehenden Bohrung 2 keine Fluidverbindung zwischen den Leitungsaufnahmen 11 bzw. 21 besteht.

Die Leitungsaufnahmen 11, 21 sind derart ausgebildet, dass sie jeweils einen ersten Teil 12, 22, durch den die durchgehende Bohrung 2 führt, und einen den ersten Teil 12, 22 umgebenden zweiten Teil 13, 23 aufweisen, so dass jeweils zwischen dem ersten Teil 12, 22 und dem zweiten Teil 13, 23 ein Ringraum 14, 24 gebildet ist. Der Boden 15, 25 der jeweiligen Leitungsaufnahme 11, 21 definiert das Ende der entsprechenden Leitungsaufnahme 11, 21. Die beiden Fluid führenden Leitungen 10, 20 sind in Fig. 1 jeweils von einem Schlauch gebildet, dessen innerer Durchlass von einer Wandung mit einem inneren Querschnitt 16, 26 und einem äußeren Querschnitt 17, 27 begrenzt wird.

Der jeweilige Schlauch 10, 20 ist dabei so in der Leitungsaufnahme 11, 21 angeordnet, dass sein innerer Querschnitt 16, 26 dichtend an dem ersten Teil 12, 22 und sein äußerer Querschnitt 17, 27 in dem Ringraum 14, 24 angeordnet und darin fixiert ist. Somit führt die durchgehende Bohrung 2 von einem Ende der Vorrichtung 1 zum anderen Ende der Vorrichtung 1 (in Richtung ihrer Längsachse 3) und verbindet so zwei Leitungen bzw. Schläuche 10, 20 miteinander, ohne dabei den Durchfluss des Fluids zu beeinträchtigen. Die beiden Leitungen 10, 20 sind dabei so in der Vorrichtung 1 angeordnet, dass sie mit dieser eine dichte Verbindung bilden.

Um eine besonders feste Verbindung zu ermöglichen, wird der äußere Querschnitt 17, 27 jedes Schlauchs 10, 20 in dem jeweiligen Ringraum 14, 24 mittels eines den Ringraum 14, 24 wenigstens zum Teil ausfüllenden Klebstoffs 100 fixiert. Dazu muss ein für das Kleben und den entsprechenden Klebstoff 100 geeignetes Material der Leitungen 10, 20 gewählt werden bzw. der Klebstoff 100 muss entsprechend des verwendeten Materials der Leitungen 10, 20 gewählt werden. Vorteilhafterweise weist bei Verwendung eines Klebstoffs 100 zur Fixierung der jeweilige Ringraum 14, 24 zu seinem Boden 15, 25 hin einen Abstandshalter 18, 28 - vorzugsweise in Form einer sich zum Boden 15, 25 hin erweiternden ringförmigen Schräge - auf. Die jeweilige Leitung bzw. der Schlauch 10, 20 wird in Form einer engen Passung jeweils über den entsprechenden ersten Teil 12 ,22 geschoben und stößt dann mit seinem Ende 19, 29 jeweils an dem entsprechenden Abstandshalter 18, 28 an, so dass ein Abstand vom Ende des Schlauchs 19, 29 zum Boden 15, 25 der Ringraums 14, 24 entsteht, wodurch der Klebstoff 100 die jeweilige Leitung 10, 20 auch stirnseitig von der Seite des Bodens 15, 25 her fixiert.

Die in Fig. 2 dargestellte Vorrichtung 1 entspricht im Wesentlichen der in Fig. 1 dargestellten Vorrichtung 1 (mit denselben Bezugszeichen). Der einzige bauliche Unterschied besteht darin, dass kein Abstandshalter wie in Fig. 1 vorhanden ist. Dies hat den Grund, dass bei Verfahren wie dem Reibschweißen, dem Laserschweißen oder dem Ultraschallschweißen oder auch beim Crimpverfahren die Leitung 10, 20 möglichst am Boden 15, 25 der Leitungsaufnahme 11, 21 anstoßen und einen möglichst engen Ringraum 14, 24 aufweisen sollte, damit diese Verfahren wirksam eingesetzt werden können. Beim Reibschweißen wird die Wärme durch eine relative Rotationsbewegung der Vorrichtung 1 und der Leitungen 10 bzw. 20 sogar im Wesentlichen stirnseitig als Reibungswärme zwischen dem Boden 15, 25 des Ringraums 14, 24 und dem Ende 19, 29 der Leitungen 10 bzw. 20 erzeugt.

Wenn Verfahren wie Reibschweißen, Laserschweißen oder Ultraschallschweißen zur Fixierung der Leitungen 10, 20 verwendet werden, müssen die Materialien der Leitungen 10, 20 ebenso wie das Material des ersten Teils 12, 22 und des zweiten Teils 13, 23 aus für das jeweilige Verfahren geeignetem Material bestehen.

Beim Reibschweißen werden zwei Teile, die sich an Kontaktflächen berühren, relativ zueinander bewegt. Durch die entstehende Reibung erwärmen sich die zwei Teile und werden plastifiziert, gehen also von einem festen in einen verformbaren bzw. fließfähigen Zustand über. Um eine feste Verbindung der Teile zu schaffen, müssen diese am Ende des Reibschweiß-Vorgangs in die gewünschte Position gebracht werden und ein Druck darauf ausgeübt werden. Geeignete Materialien sind zum Beispiel thermoplastische Kunststoffe. Das Ultraschallschweißen gehört zum Bereich des Reibschweißens und ist ein Verfahren, bei dem thermoplastische Kunststoffe verbunden werden, wobei die benötige Wärme durch eine hochfrequente mechanische Schwingung (Ultraschall) erreicht wird. Um das Reibschweißverfahren (inklusive des Ultraschallschweißens) für die erfindungsgemäße Vorrichtung 1 anzuwenden, müssen die Materialien der jeweiligen Leitung 10, 20 und des jeweiligen ersten Teils 12, 22 so gewählt werden, dass sie durch Rotieren relativ zueinander und/oder durch Ultraschall in einen Zustand gebracht werden können, der es erlaubt, dass sie sich miteinander verbinden.

Das Laserschweißverfahren wird vor allem zum Verschweißen von Bauteilen eingesetzt, die schnell zusammengeschweißt werden müssen und bei denen eine schmale und schlanke Schweißnaht benötigt wird. Beim Laserschweißen wird der Laserstrahl mittels einer Optik fokussiert. Durch die Absorption der Laserleistung auf der Oberfläche des zu schweißenden Materials entsteht ein sehr schneller Anstieg der Temperatur, so dass sich eine Schmelze bildet. Um das Laserschweißverfahren für die erfindungsgemäße Vorrichtung 1 anzuwenden, muss der jeweilige zweite Teil 13, 23 aus einem Material bestehen, das soweit für Laserstrahlen durchlässig ist, dass die jeweilige Leitung 10, 20 dadurch an dem jeweiligen ersten Teil 12, 22 fixiert werden kann.

Das Crimpen ist ein Verfahren, bei dem zwei Teile durch mechanische bzw. plastische Verformung miteinander verbunden werden, wobei eine homogene, schwer lösbare Verbindung entsteht, die elektrisch und mechanisch sehr sicher ist. Um dieses Verfahren für die erfindungsgemäße Vorrichtung 1 anzuwenden, müssen entsprechend geeignete Materialien jeweils für die jeweilige Leitung 10, 20 und das erste und das zweite Teil 12, 13, 22, 23 verwendet werden.

Den oben beschriebenen Ausführungsbeispielen ist gemeinsam, dass die Leitungen 10, 20 beheizbar sein können. Dies kann beispielsweise durch einen Heizkreis 5 mit Heizdrähten, die um die jeweilige Leitung 10, 20 gewickelt und daran fixiert sind, erfolgen. Um eine gezielte Steuerung der Heizleistung zu erreichen, können zwei oder mehr Heizkreise 5 bereitgestellt sein, deren Leistung beispielsweise über eine Steuerplatine unter Auswertung spezifischer auf den Einsatzort und -zweck abgestimmter Parameter und/oder wenigstens eines Temperatursignals eines Temperatursensors gesteuert wird. Jeder der Heizkreise 5 ist auf oder in einer der beiden Leitungen 10, 20 fixiert und kann getrennt gesteuert werden. Somit ist eine Verwendung in verschiedenen Einsatzbereichen möglich, in einem ersten höheren Temperaturbereich T1, in dem die Temperatur zwischen -40°C und 200°C liegt und in einem zweiten niedrigeren Temperaturbereich T2, in dem die Temperatur beispielsweise in einem Bereich von -40°C bis 120°C liegt. Solche Temperaturbereiche sind beispielsweise bei einer Leitungsführung von einem Außenbereich in einen Innenbereich oder von einem motornahen in einen motorfernen Bereich eines Nutzfahrzeugs oder eines Automobils üblich. Dabei sind die Leitungen, die für den höheren Temperaturbereich T1 geeignet sind, in aller Regel deutlich teurer, weshalb sich der Einsatz der erfindungsgemäßen Vorrichtung in Form einer Kostenreduzierung auszahlt, da derartige hochwertigere Leitungen nur dort verwendet werden, wo dies aufgrund der Anforderungen auch notwendig ist, während in den übrigen Bereichen kostengünstigere Leitungen Verwendung finden.

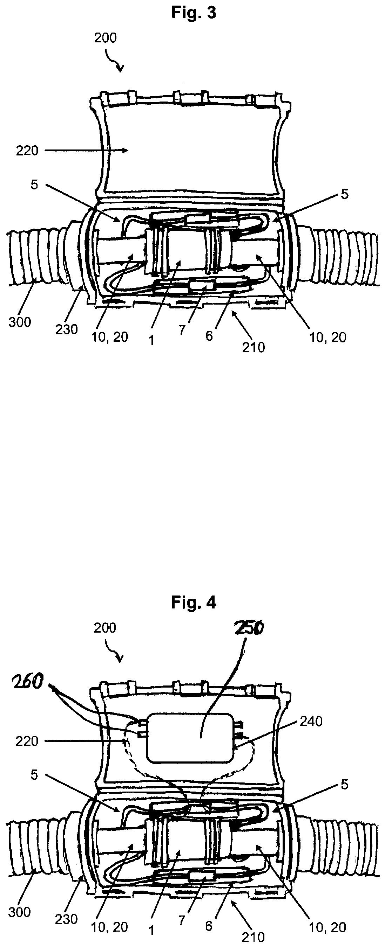

Bei der erfindungsgemäßen Vorrichtung 1 sind die Heizkreise 5 an der Außenseite der Vorrichtung 1 miteinander verbunden. Hierzu werden sie im Bereich der Anschlussstellen aus den Leitungen 10, 20 nach außen geführt und durch geeignete Kontakte 7 miteinander oder mit den Kontakten 260 einer Steuereinrichtung, beispielsweise in Form einer in Fig. 4 dargestellten Steuerplatine 250 verbunden. Diese Verbindungsstelle mit den Kontakten 7 ist vorteilhafterweise mit einer Ummantelung 6 versehen, die die Verbindungsstelle vor Umwelteinflüssen schützt, so dass eine sichere elektrische Verbindung gewährleistet ist.

Die erfindungsgemäße Vorrichtung 1 ist vorteilhafterweise, wie in Figuren 3 und 4 dargestellt, in einem Gehäuse 200 angeordnet, das aus einem Grundkörper 210 und einem daran einstückig (z.B. mit einem Filmscharnier) ausgebildeten oder angeordneten Deckel 220 verschließbar gebildet ist. Der Deckel 220 kann auch einseitig an dem Grundkörper 210 klappbar befestigt sein und mittels eines Einrastmechanismus - wie in z.B. Fig. 3 gezeigt - damit verbunden bzw. daran befestigt werden. Andere Ausführungen des Gehäuses 200 sind ebenso möglich, solange das Gehäuse 200 zu öffnen ist, so dass die Vorrichtung 1 erreicht werden kann, um diese beispielsweise dort einzubauen.

Das Gehäuse 200 weist an seinen Enden in Richtung seiner Längsachse zwei Öffnungen auf, durch die die jeweiligen Leitungen 10, 20 geführt werden können. Dazu kann z.B. Verbindungselemente 230 bereitgestellt sein, die eine Verbindung zwischen einer Führungseinrichtung 300, in der die Leitungen 10, 20 geführt und vor Umwelteinflüssen geschützt werden, mit dem Gehäuse 200 ermöglicht. Die Führungseinrichtung 300 kann beispielsweise in Form einer die Schlauchenden dicht umgebenden Tülle ausgebildet sein, die mit einem nach außen vorspringenden Bund in eine entsprechend Ringnut des Gehäuses 200 eingreift. Die Ringnuten bilden in diesem Fall die Verbindungselemente 230.

Das Material des Gehäuses sollte den Vorgaben der Automobilindustrie bezüglich Dichtigkeit, Medienbeständigkeit und Hitzebeständigkeit etc. genügen.

Vorteilhafterweise hat das Gehäuse 200 eine Aussparung 240, beispielsweise an seinem Deckel 220, wie in Fig. 4 schematisch dargestellt, um darin eine Steuerplatine 250 zum Steuern der Heizkreise 5 oder anderer Funktionalitäten aufzunehmen. Die Steuerplatine 250 ist zur Verbindung mit den Heizkreisen 5 mit mehreren Kontakten 260 versehen.

Durch die erfindungsgemäße Vorrichtung 1 zum Verbinden von zwei Fluid führenden Leitungen miteinander und das erfindungsgemäße Gehäuse 200 können zwei unterschiedliche Leitungen 10, 20 dicht und kompakt über ein einziges Bauteil miteinander verbunden werden. Ferner kann durch die erfindungsgemäße Anordnung der Heizkreise 5 eine getrennte Temperatursteuerung der jeweiligen Leitungen 10, 20 in einfacher Weise erfolgen.

### Bezugszeichenliste

- 1: Vorrichtung
- 2: (durchgängige) Bohrung
- 3: Längsachse
- 4: Abstand (zwischen den Leitungsaufnahmen)
- 5: Heizkreis
- 6: Ummantelung
- 7: Kontakt (für Heizkreise)
- 10, 20: Leitung bzw. Schlauch
- 11, 21: Leitungsaufnahme
- 12,22: erster Teil (von 11, 21)
- 13, 23: zweiter Teil (von 11, 21)
- 14, 24: Ringraum
- 15, 25: Boden des Ringraums
- 16, 26: innerer Querschnitt (von 10 und 20)
- 17, 27: äußerer Querschnitt (von 10 und 20)
- 18, 28: Abstandshalter
- 19, 29: Ende (von 10 und 20)
- 100: Klebstoff
- 200: Gehäuse
- 210: Grundkörper
- 220: Deckel
- 230: Verbindungselement
- 240: Aussparung
- 250: Steuerplatine
- 260: Kontakt (an 250)
- 300: Führungseinrichtung
- T1: (höherer) Temperaturbereich
- T2: (niedrigerer) Temperaturbereich

## Patentansprüche

1. Vorrichtung (1) zum Verbinden von zwei Fluid führenden Leitungen (10, 20), wobei die Vorrichtung (1) eine erste der Fluidführenden Leitungen (10, 20), eine zweite der Fluidführenden Leitungen (10, 20) und eine durchgängige Bohrung (2) zur Weiterleitung des Fluids aufweist, wobei die Vorrichtung (1) zwei sich gegenüberliegende Leitungsaufnahmen (11, 21) in Richtung ihrer Längsachse (3) aufweist, die in einem vorbestimmten Abstand (4) voneinander innerhalb der Vorrichtung (1) enden, wobei jede der sich gegenüberliegenden Leitungsaufnahmen (11, 21) derart ausgebildet ist, dass sie mit einem ersten Teil (12, 22), durch den die durchgängige Bohrung (2) führt, und einem das erste Teil (12, 22) umgebenden zweiten Teil (13, 23) versehen ist, so dass zwischen dem ersten Teil (12, 22) und dem zweiten Teil (13, 23) ein Ringraum (14, 24) gebildet ist, dessen Boden (15, 25) das Ende der jeweiligen Leitungsaufnahme (11, 21) definiert, und die erste der Fluid führenden Leitungen (10, 20) derart in einer der Leitungsaufnahmen (11, 21) angeordnet ist, dass sie mit einem inneren Querschnitt (16, 26) dichtend an dem ersten Teil (12, 22) der Vorrichtung (1) und mit einem äußeren Querschnitt (17, 27) in dem Ringraum (14, 24) angeordnet und dort fixiert ist, und die zweite der Fluid führenden Leitungen (10, 20) derart in der anderen der Leitungsaufnahmen (11, 21) angeordnet ist, dass sie mit einem inneren Querschnitt (16, 26) dichtend an dem ersten Teil (12, 22) der Vorrichtung (1) und mit einem äußeren Querschnitt (17, 27) in dem Ringraum (14, 24) angeordnet und dort fixiert ist, **dadurch gekennzeichnet, dass** jede der Leitungen (10, 20) von einem Schlauch gebildet wird, dass die erste der Fluid führenden Leitungen (10, 20) für einen Einsatz in einem höheren Temperaturbereich T1 von -40°C bis zu 200°C und die zweite der Fluid führenden Leitungen (10, 20) für einen Einsatz in einem niedrigeren Temperaturbereich T2 von -40°C < T2 ≤ 120°C ausgebildet ist, dass jede der Fluid führenden Leitungen (10, 20) aus einem unterschiedlichen Material hergestellt ist und die Fluid führenden Leitungen (10, 20) mittels wenigstens eines Heizdrähte, die um die jeweilige Leitung (10, 20) gewickelt und daran fixiert sind, umfassenden Heizkreises (5) beheizbar sind.

2. Vorrichtung nach Anspruch 1, **dadurch gekennzeichnet, dass** jede der Fluid führenden Leitungen (10, 20) mittels eines den Ringraum (14, 24) wenigstens zum Teil ausfüllenden Klebstoffs (100) fixiert ist.

3. Vorrichtung nach Anspruch 2, **dadurch gekennzeichnet, dass** an dem Boden (15, 25) jedes der Ringräume (14, 24) wenigstens ein Abstandshalter (18, 28) ausgebildet ist, der einen vom Boden (15, 25) beabstandeten Anschlag für das Ende (19, 29) jeder der Leitungen (10, 20) bildet.

4. Vorrichtung nach Anspruch 1, **dadurch gekennzeichnet, dass** jede der Fluid führenden Leitungen (10, 20) mittels Reibschweißen, Ultraschallschweißen oder Laserschweißen in dem Ringraum (14, 24) fixiert ist.

5. Vorrichtung nach Anspruch 1, **dadurch gekennzeichnet, dass** jede der Fluid führenden Leitungen (10, 20) mittels einer Crimpverbindung an dem zweiten Teil (13, 23) verbunden ist.

6. Vorrichtung nach wenigstens einem der vorhergehenden Ansprüche, **dadurch gekennzeichnet, dass** das Fluid in jeder der Leitungen (10, 20) ein Harnstoff-Wasser-Gemisch ist.

7. Vorrichtung nach einem der vorhergehenden Ansprüche, **dadurch gekennzeichnet, dass** wenigstens zwei Heizkreise (5) bereitgestellt sind.

8. Vorrichtung nach Anspruch 7, **dadurch gekennzeichnet, dass** die Steuerung der Leistung jedes der Heizkreise (5) über einen Temperatursensor erfolgt.

9. Vorrichtung nach Anspruch 7 oder 8, **dadurch gekennzeichnet, dass** die Heizkreise (5) von einem Heizdraht, einer Heizfolie oder einer Heizmatte gebildet werden, die an oder in jeder der Fluid führenden Leitungen (10, 20) angeordnet und dort fixiert sind und die außerhalb der Vorrichtung (1) mittels elektrischer Kontakte (7) kontaktiert sind.

10. Vorrichtung nach Anspruch 9, wobei eine Ummantelung (6) um die Kontakte (7) der Heizkreise (5) bereitgestellt ist.

11. Vorrichtung (1) zum Verbinden von zwei Fluid führenden Leitungen (10, 20) nach wenigstens einem der vorhergehenden Ansprüche mit einem Gehäuse (200), das aus einem Grundkörper (210) und einem daran ausgebildeten oder befestigbaren Deckel (220) gebildet ist und in seiner Längsrichtung zwei sich gegenüberliegende Öffnungen aufweist, durch die jeweils eine der Fluid führenden Leitungen (10, 20) geführt ist.

12. Vorrichtung nach Anspruch 11, **dadurch gekennzeichnet, dass** an den Öffnungen des Gehäuses (200) ein Verbindungselement (230) bereitgestellt ist, das dazu eingerichtet ist, eine Führungseinrichtung (300) für jede der ein Fluid führenden Leitungen (10, 20) mit dem Gehäuse (200) zu verbinden.

13. Vorrichtung nach Anspruch 11 oder 12, **dadurch gekennzeichnet, dass** das Gehäuse (200) eine Aussparung (240) für die Aufnahme einer Steuerplatine (250) aufweist.

## Claims

1. Device (1) for connecting two fluid-conducting lines (10, 20), the device (1) having a first of the fluid-conducting lines (10, 20), a second of the fluid-conducting lines (10, 20), and a continuous hole (2) for conveying the fluid, the device (1) having, in the direction of its longitudinal axis (3), two opposing line receptacles (11, 21) which end at a predetermined distance (4) from one another within the device (1), each of the opposing line receptacles (11, 21) being designed such that it is provided with a first part (12, 22) through which the continuous hole (2) passes and a second part (13, 23) which encloses the first part (12, 22), so that an annular space (14, 24) is formed between the first part (12, 22) and the second part (13, 23), the bottom (15, 25) of which space defines the end of the particular line receptacle (11, 21), and the first of the fluid-conducting lines (10, 20) being arranged in one of the line receptacles (11, 21) such that an inner cross section (16, 26) thereof is sealingly arranged on the first part (12, 22) of the device (1) and an outer cross section (17, 27) thereof is arranged in the annular space (14, 24), and being secured in said position, and the second of the fluid-conducting lines (10, 20) being arranged in the other of the line receptacles (11, 21) such that an inner cross section (16, 26) thereof is sealingly arranged on the first part (12, 22) of the device (1) and an outer cross section (17, 27) thereof is arranged in the annular space (14, 24), and being secured in said position, **characterized in that** each of the lines (10, 20) is formed by a hose, **in that** the first of the fluid-conducting lines (10, 20) is designed for use in a higher temperature range T1 of from -40°C to 200°C and the second of the fluid-conducting lines (10, 20) is designed for use in a lower temperature range T2 of -40°C < T2 ≤ 120°C, and **in that** each of the fluid-conducting lines (10, 20) is made of a different material and the fluid-conducting lines (10, 20) can be heated by means of at least one heating circuit (5) comprising heating wires that are wound around the particular line (10, 20) and are secured thereto.

2. Device according to claim 1, **characterized in that** each of the fluid-conducting lines (10, 20) is secured by means of an adhesive (100) which at least partially fills the annular space (14, 24).

3. Device according to claim 2, **characterized in that** at least one spacer (18, 28) is formed at the bottom (15, 25) of each of the annular spaces (14, 24), which spacer forms a stop for the end (19, 29) of each of the lines (10, 20), which stop is at a distance from the bottom (15, 25).

4. Device according to claim 1, **characterized in that** each of the fluid-conducting lines (10, 20) is secured in the annular space (14, 24) by means of friction welding, ultrasonic welding, or laser welding.

5. Device according to claim 1, **characterized in that** each of the fluid-conducting lines (10, 20) is connected to the second part (13, 23) by means of a crimped connection.

6. Device according to any of the preceding claims, **characterized in that** the fluid in each of the lines (10, 20) is a urea-water mixture.

7. Device according to any of the preceding claims, **characterized in that** at least two heating circuits (5) are provided.

8. Device according to claim 7, **characterized in that** the power of each of the heating circuits (5) is controlled by means of a temperature sensor.

9. Device according to either claim 7 or claim 8, **characterized in that** the heating circuits (5) are formed by a heating wire, a heating foil or a heating mat, which are arranged on or in each of the fluid-conducting lines (10, 20) and are secured in said position, and which are contacted outside the device (1) by means of electrical contacts (7).

10. Device according to claim 9, wherein a jacket (6) is provided around the contacts (7) of the heating circuits (5).

11. Device (1) for connecting two fluid-conducting lines (10, 20) according to at least one of the preceding claims, comprising a housing (200) which is formed of a main body (210) and a cover (220) formed thereon or attachable thereto and has, in its longitudinal direction, two opposing openings through each of which one of the fluid-conducting lines (10, 20) extends.

12. Device according to claim 11, **characterized in that** a connecting element (230) is provided at the openings of the housing (200), which element is configured to connect a guide means (300) for each of the fluid-conducting lines (10, 20) to the housing (200).

13. Device according to either claim 11 or claim 12, **characterized in that** the housing (200) has a recess (240) for receiving a control circuit board (250).

## Revendications

1. Dispositif (1) destiné à connecter deux conduites de transport de fluide (10, 20), le dispositif (1) présentant une première des conduites de transport de fluide (10, 20), une seconde des conduites de transport de fluide (10, 20) et un alésage traversant (2) pour acheminer le fluide, le dispositif (1) présentant deux réceptacles de conduite opposés (11, 21) dans le sens de leur axe longitudinal (3) qui se terminent à une distance prédéterminée (4) l'un de l'autre à l'intérieur du dispositif (1), chacun des réceptacles de conduite opposés (11, 21) étant conçu de sorte qu'il est doté d'une première partie (12, 22) à travers laquelle passe l'alésage traversant (2), et d'une seconde partie (13, 23) entourant la première partie (12, 22) de sorte qu'un espace annulaire (14, 24) est formé entre la première partie (12, 22) et la seconde partie (13, 23), dont le fond (15, 25) définit l'extrémité du réceptacle de conduite respectif (11, 21), et la première des conduites de transport de fluide (10, 20) est disposée dans un des réceptacles de conduite (11,21) de manière à ce qu'elle soit disposée de manière étanche avec une section transversale intérieure (16, 26) sur la première partie (12, 22) du dispositif (1) et avec une section transversale extérieure (17, 27) dans l'espace annulaire (14, 24) et y soit fixée, et la seconde des conduites de transport de fluide (10, 20) est disposée dans l'autre des réceptacles de conduite (11, 21) de manière à ce qu'elle soit disposée de manière étanche avec une section transversale intérieure (16, 26) sur la première partie (12, 22) du dispositif (1) et avec une section transversale extérieure (17, 27) dans l'espace annulaire (14, 24) et y soit fixée, **caractérisé en ce que** chacune des conduites (10, 20) est formée par un tuyau flexible, **en ce que** la première des conduites de transport de fluide (10, 20) est conçue pour être utilisée dans une plage de températures T1 plus élevée de -40 °C à 200 °C et la seconde des conduites de transport de fluide (10, 20) est conçue pour être utilisée dans une plage de température plus basse T2 de -40 °C <T2 <120 °C, **en ce que** chacune des conduites de transport de fluide (10, 20) est constituée d'un matériau différent et les conduites de transport de fluide (10, 20) peuvent être chauffées au moyen d'au moins un circuit de chauffage (5) comprenant des fils chauffants qui sont enroulés autour de la conduite respective (10, 20) et qui y sont fixés.

2. Dispositif selon la revendication 1, **caractérisé en ce que** chacune des conduites de transport de fluide (10, 20) est fixée au moyen d'un adhésif (100) qui remplit au moins partiellement l'espace annulaire (14, 24).

3. Dispositif selon la revendication 2, **caractérisé en ce qu'**au moins une entretoise (18, 28) est formée sur le fond (15, 25) de chacun des espaces annulaires (14, 24) et forme une butée espacée du fond (15, 25) pour l'extrémité (19, 29) de chacune des conduites (10, 20).

4. Dispositif selon la revendication 1, **caractérisé en ce que** chacune des conduites de transport de fluide (10, 20) est fixée dans l'espace annulaire (14, 24) au moyen d'une soudure par friction, d'une soudure par ultrasons ou d'une soudure au laser.

5. Dispositif selon la revendication 1, **caractérisé en ce que** chacune des conduites de transport de fluide (10, 20) est connectée à la seconde partie (13, 23) au moyen d'un raccord à sertir.

6. Dispositif selon au moins l'une des revendications précédentes, **caractérisé en ce que** le fluide dans chacune des conduites (10, 20) est un mélange urée-eau.

7. Dispositif selon l'une des revendications précédentes, **caractérisé en ce qu'au** moins deux circuits de chauffage (5) sont prévus.

8. Dispositif selon la revendication 7, **caractérisé en ce que** la puissance de chacun des circuits de chauffage (5) est commandée à l'aide d'un capteur de température.

9. Dispositif selon la revendication 7 ou 8, **caractérisé en ce que** les circuits de chauffage (5) sont formés par un fil chauffant, une feuille chauffante ou un tapis chauffant, qui sont disposés sur ou dans chacune des conduites de transport de fluide (10, 20) et y sont fixés et qui sont mis en contact en-dehors du dispositif (1) au moyen de contacts électriques (7).

10. Dispositif selon la revendication 9, dans lequel une enveloppe (6) est prévue autour des contacts (7) des circuits de chauffage (5).

11. Dispositif (1) destiné à connecter deux conduites de transport de fluide (10, 20) selon au moins l'une des revendications précédentes, comportant un boîtier (200) qui est formé d'un corps de base (210) et d'un couvercle (220) formé ou pouvant être fixé sur celui-ci et qui présente dans sa direction longitudinale deux ouvertures opposées, à travers chacune desquelles passe l'une des conduites de transport de fluide (10, 20).

12. Dispositif selon la revendication 11, **caractérisé en ce qu'**un élément de raccordement (230) est prévu au niveau des ouvertures du boîtier (200), lequel élément de raccordement est conçu pour connecter un dispositif de guidage (300) pour chacune des conduites de transport de fluide (10, 20) avec le boîtier (200).

13. Dispositif selon la revendication 11 ou 12, **caractérisé en ce que** le boîtier (200) présente un évidement (240) pour recevoir une carte de commande (250).
